# DEMANDE DE BREVET EUROPEEN

(11) **EP 0 698 719 A1**
(43) Date de publication de la demande: **28.02.1996**
(21) Numéro de dépôt: 95401801.6
(22) Date de dépôt: 01.08.1995
(51) Int. Cl.: E06B 3/96, B29C 65/00, E06B 7/23

(54) **Procédé de fabrication d'une menuiserie en PVC ou analogue, et garniture d'étanchéité utilisée dans ce procédé**

(30) Priorité: 11.08.1994 FR 9409944
(71) Demandeur: HUTCHINSON, F-75008 Paris (FR)
(72) Inventeur: Douillet, Jacques, F-38430 Moirans (FR)
(74) Mandataire: Ramey, Daniel

(57) **Abrégé**

L'invention concerne un procédé de fabrication d'une menuiserie en PVC ou en matériau thermosoudable, et les garnitures d'étanchéité équipant ces profilés.

Selon l'invention, les garnitures d'étanchéité (10) sont réalisées en matériau non-thermosoudable et sont montées à frottement et avec un allongement faible dans des gorges ou rainures des profilés (16). Lors de l'assemblage des profilés par thermosoudure, les garnitures d'étanchéité (10) évitent la formation de bourrelets de soudure (26) dans leurs zones de montage sur les profilés.

## Description

L'invention concerne un procédé de fabrication d'une menuiserie en PVC ou autre matériau thermosoudable, ainsi que les garnitures d'étanchéité qui sont utilisables dans ce procédé.

Les menuiseries en PVC ou autre matière plastique soudable ont d'abord été fabriquées en assemblant par soudure des tronçons de profilés sur lesquels on posait ensuite à la main des joints ou garnitures d'étanchéité.

On a ensuite amélioré cette technique en posant les garnitures d'étanchéité sur les profilés immédiatement après la fabrication de ces derniers, qui sont réalisés en général par extrusion. On obtient ainsi des profilés de grande longueur en PVC ou matériau analogue, qui sont équipés de garnitures d'étanchéité et que l'on coupe ensuite aux longueurs voulues pour constituer des menuiseries (des portes, des portes-fenêtres, des fenêtres, etc,.). Toutefois, l'assemblage par soudure des tronçons de profilés munis des garnitures d'étanchéité pose quelques problèmes. En effet, ces opérations de soudure consistent à chauffer et à ramollir les extrémités des profilés à assembler, puis à rapprocher ces extrémités et à les appliquer l'une sur l'autre à pression et à les maintenir ainsi pendant une phase de refroidissement jusqu'à ce que l'assemblage soit rigide. La pression exercée sur les extrémités ramollies des profilés se traduit par une diminution de longueur de chaque tronçon de profilé de quelques millimètres et par la formation d'un bourrelet de matière plastique sur chaque profilé de part et d'autre de la ligne de soudure.

Lorsque les garnitures d'étanchéité dont sont équipés les tronçons de profilés sont également en matière thermosoudable, il se produit le même phénomène au niveau de la ligne de soudure entre les garnitures d'étanchéité, avec la formation d'un bourrelet plus ou moins épais et plus ou moins rigide à la jonction des deux tronçons de garniture d'étanchéité, ce qui nuit d'une part à l'esthétique et d'autre part à la qualité de l'étanchéité, le bourrelet de soudure entre les garnitures étant plus rigide que les garnitures et très peu déformable élastiquement.

On a également proposé un procédé dans lequel les garnitures d'étanchéité sont en une matière non-thermosoudable et sont tirées en arrière sur les tronçons de profilés pour être écartées de la ligne de soudure entre ces tronçons, lorsque cette ligne de soudure est réalisée. Il est ensuite prévu de libérer ou relâcher les garnitures pour qu'elles reviennent en appui l'une sur l'autre au niveau de la ligne de soudure. Ce procédé qui paraît très délicat à mettre en oeuvre, ne peut par ailleurs fournir de bons résultats, car le bourrelet de soudure qui est formé entre les tronçons de profilés de part et d'autre de la ligne de soudure s'oppose à un positionnement correct des garnitures d'étanchéité lorsqu'elles sont par la suite relâchées ou libérées.

La présente invention a notamment pour but d'éviter les inconvénients de ces techniques connues.

Elle a pour objet un procédé de fabrication d'une menuiserie en PVC ou autre matière thermosoudable, qui soit simple, rapide et efficace et qui donne de bons résultats tant au niveau de l'étanchéité que de l'esthétique.

Elle propose à cet effet un procédé de fabrication d'une menuiserie en PVC ou autre matière plastique thermosoudable, consistant à monter des garnitures d'étanchéité en matériau élastiquement déformable sur des profilés de menuiserie et à assembler ces profilés entre eux par thermosoudage, réalisé par chauffage des extrémités des profilés et appui des extrémités ramollies l'une sur l'autre, caractérisé en ce que les garnitures d'étanchéité en matériau non-thermosoudable tel que du caoutchouc par exemple sont montées dans des gorges ou rainures des profilés et y sont laissées en place lorsque les extrémités ramollies des profilés sont pressées l'une sur l'autre, de telle sorte que les extrémités des garnitures sont alors également pressées l'une sur l'autre et s'opposent à la formation d'un bourrelet thermosoudable dans leurs zones de montage sur les profilés.

Le procédé selon l'invention est particulièrement simple, dans la mesure où il n'est pas nécessaire de prendre de précautions particulières pour le thermosoudage des profilés munis des garnitures d'étanchéité. Par ailleurs, la présence des garnitures d'étanchéité en matériau non-thermosoudable au niveau de la ligne de soudure empêche la formation de bourrelets de matière thermosoudable dans les zones où s'étendent les garnitures, ces bourrelets se formant alors à l'extérieur des zones de montage des garnitures, comme précédemment, mais non à l'intérieur de ces zones, ce qui évite la formation de points durs ou de lignes dures sous les garnitures d'étanchéité et améliore ainsi l'étanchéité dans les angles des menuiseries.

Selon une autre caractéristique de l'invention, les garnitures d'étanchéité sont montées sous tension avec un allongement faible dans les gorges ou rainures des profilés, cet allongement étant par exemple de l'ordre de 1 à quelques %, cette tension étant approximativement annulée au moment de la soudure des tronçons de profilés en raison de la poussée exerçée sur les garnitures, le raccourcissement résultant des garnitures d'étanchéité permettant de compenser approximativement la réduction de longueur des tronçons de profilés lors de leur thermosoudage.

Avantageusement, les garnitures d'étanchéité comprennent des moyens de limitation de leur allongement en tension, tels qu'un fil, un ruban, une tresse ou un cordon longitudinal sensiblement inextensible noyé dans la matière des garnitures.

L'invention propose également une garniture d'étanchéité pour menuiserie en PVC ou autre matériau thermosoudable, destinée à être utilisée dans le procédé qui vient d'être décrit, cette garniture étant caractérisée en ce qu'elle est réalisée en un matériau extensible non-thermosoudable tel que du caoutchouc.

Avantageusement, cette garniture comprend un moyen de limitation d'allongement en tension, tel par exemple qu'un élément longiligne sensiblement inextensible du type fil, cordon, ruban ou tresse, noyé dans la matière de la garniture et s'étendant longitudinalement dans celle-ci.

Une telle garniture peut être réalisée en matière compacte et/ou en matière cellulaire.

L'invention sera mieux comprise et d'autres caractéristiques, détails et avantages de celle-ci apparaîtront plus clairement à la lecture de la description qui va suivre, faite à titre d'exemple en référence aux dessins annexés dans lesquels :
- la figure 1 est une vue schématique en coupe transversale d'une garniture d'étanchéité selon l'invention, montée dans un profilé de menuiserie ;
- les figures 2 et 3 illustrent schématiquement les opérations de thermosoudage de deux tronçons de profilés conformément à l'invention.

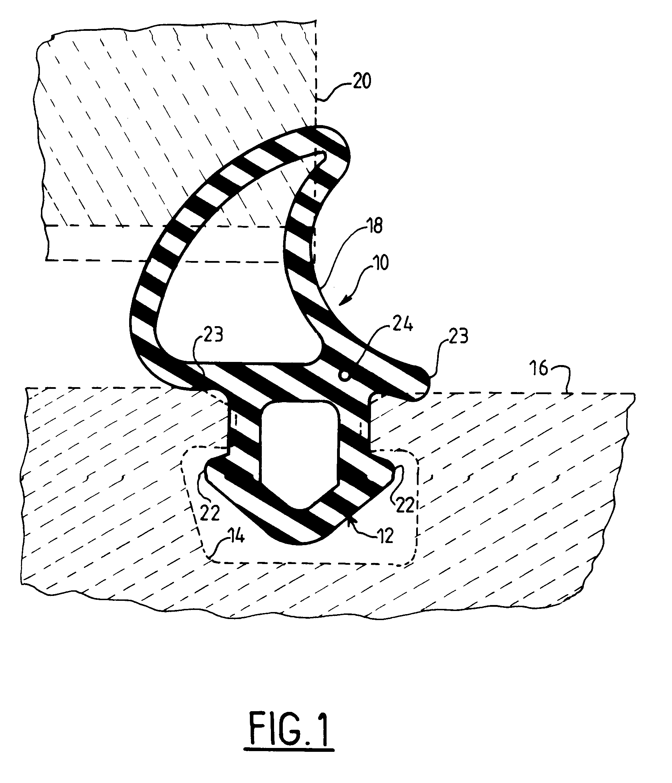

Un exemple de réalisation d'une garniture d'étanchéité 10 selon l'invention a été représenté en figure 1, cette garniture 10 étant réalisée en une matière élastiquement déformable et extensible telle que du caoutchouc ou un élastomère du type EPDM par exemple, cette matière étant non-thermosoudable.

On peut en particulier utiliser une composition à base de EPDM dans une quantité comprise entre 20 et 40 % environ en poids, cette composition comprenant également une huile plastifiante en quantité de l'ordre de 20 à 40 % environ en poids, et du noir de carbone en quantité correspondant aux caractéristiques mécaniques nécessaires à la fonction d'étanchéité.

On obtient ainsi une matière élastiquement déformable et non-thermosoudable, supportant sans dégradation de ses caractéristiques des températures de l'ordre de 245 °C pendant la durée de la soudure des profilés de menuiserie en PVC ou analogue.

La garniture d'étanchéité 10 comprend une base 12 de fixation dans une gorge ou rainure 14 d'un profilé 16 de menuiserie réalisé en une matière plastique thermosoudable telle que du PVC, et une partie tubulaire compressible 18 s'étendant à l'extérieur du profilé 16 et destinée à être plus ou moins écrasée ou aplatie sur un autre élément ou profilé 20 de menuiserie, pour assurer l'étanchéité entre les deux éléments ou profilés 16, 20.

La gorge ou rainure 14 du profilé 16 a une section sensiblement en queue d'aronde, la base 12 de fixation de la garniture étant tubulaire et ayant une forme lui permettant d'être introduite facilement, par déformation élastique, dans la gorge ou rainure 14 et d'y rester ensuite en résistant à un effort d'arrachement, la base tubulaire 12 comprenant deux rebords longitudinaux parallèles 22 en saillie sur ses faces latérales, ces rebords 22 venant s'appliquer sur les bords de l'ouverture de la gorge 14 lorsqu'on exerce un effort d'arrachement sur la garniture 10 et s'opposant ainsi à cet arrachement.

L'autre partie 18 de la garniture comprend également des rebords longitudinaux 23 parallèles aux rebords 22 de la base 12 et s'appliquant sur les bords de l'ouverture de la gorge 14.

On remarquera que la dimension transversale de la base 12 au niveau de l'ouverture de la gorge 14 est, à l'état non contraint, légèrement supérieure à la largeur de cette ouverture, de telle sorte que, quand la base 12 de la garniture est introduite dans la gorge 14 du profilé 16, elle est légèrement comprimée par les bords de l'ouverture de la gorge 14 et les forces de frottement entre les bords de cette ouverture et la partie correspondante de la base 12 de la garniture s'opposent au déplacement de la garniture dans la gorge et favorisent son maintien en place.

Avantageusement, la garniture comprend encore un élément longitudinal sensiblement inextensible 24, tel qu'un cordon, un fil, un ruban, une tresse, etc, qui est noyé dans la matière de la garniture 10, par exemple dans la zone de jonction entre la base de fixation 12 et la partie compressible 18.

Cet élément sensiblement inextensible 24, qui est par exemple en matière textile et qui pourrait également être réalisé en une matière plastique ou en élastomère par exemple par co-extrusion, permet de limiter l'allongement de la garniture d'étanchéité 10 à une valeur de l'ordre de 1 à quelques % lors de son montage sur le profilé 16. Comme indiqué plus haut, les profilés 16 sont avantageusement fabriqués par extrusion et les garnitures d'étanchéité 10 sont montées en temps masqué sur les profilés, par enfoncement à force dans les gorges 14 des profilés dès que possible après leur extrusion. Il est avantageux que les garnitures 10 soient en tension lors de leur montage. Leur allongement résultant de cette tension de montage est limité à une valeur relativement faible par les éléments sensiblement inextensibles 24 et les garnitures 10 restent en tension et faiblement allongées après leur montage sur les profilés 16, en raison de leur frottement sur les bords des ouvertures des gorges 14.

Bien entendu, les garnitures d'étanchéité selon l'invention peuvent avoir des formes très diverses, l'exemple de réalisation de la figure 1 étant donné uniquement à titre d'illustration, et elles peuvent être réalisées en matière compacte et/ou cellulaire, en fonction des besoins.

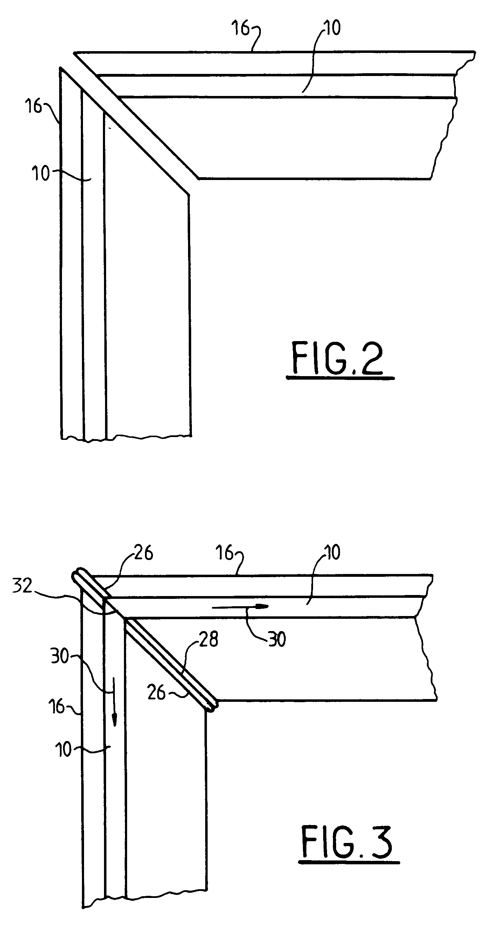

Les figures 2 et 3 illustrent schématiquement le thermosoudage de deux profilés 16 de menuiserie en PVC ou autre matière plastique thermosoudable, comprenant des garnitures d'étanchéité 10, ces profilés et garnitures étant par exemple du même type que ceux représentés en figure 1, les profilés 16 ayant été coupés à 45° à une extrémité et étant disposés perpendiculairement l'un à l'autre pour former un angle, comme on le voit en figure 2.

Le soudage des extrémités des deux profilés 16 est réalisé par fusion partielle ou ramollissement sur des plaques chauffantes à revêtement de "TEFLON", à une température qui est par exemple de l'ordre de 245° C. Les profilés dont les extrémités ont été ramollies à cette température, sont poussés l'un contre l'autre, chacun dans sa direction longitudinale, ce qui entraîne, comme représenté schématiquement en figure 3, la formation d'un bourrelet 26 de soudure de part et d'autre de la ligne 28 de jonction des profilés, et une diminution de longueur de chaque profilé d'environ 2 à 3 mm. Ce sont la formation des bourrelets 26 et la diminution de longueur des profilés 16 qui, dans la technique antérieure, ont posé des problèmes au niveau de l'étanchéité, car les bourrelets de soudure 26 se formaient sur toute la longueur des lignes de jonction 28 et avaient tendance à déplacer les garnitures d'étanchéité, à former des lignes ou des points durs sous ces garnitures, à empêcher un raccordement correct entre les garnitures d'étanchéité des deux profilés, etc..

En outre, lorsque les garnitures d'étanchéité étaient également en matériau thermosoudable, elles se soudaient en même temps que les profilés, et leur jonction comportait des bourrelets de soudure nuisibles à la qualité de l'étanchéité et à l'aspect esthétique.

Tous ces inconvénients sont évités conformément à la présente invention, grâce au fait que les garnitures d'étanchéité 10 sont en matière non-thermosoudable et sont laissées en place dans les gorges ou rainures 14 des profilés 16 lors de l'assemblage entre ces profilés par thermosoudure.

Lorsque les extrémités ramollies des profilés 16 sont pressées l'une sur l'autre pour effectuer la jonction de ces profilés, les garnitures d'étanchéité 10 sont, par cet effort de pression, repoussées légèrement dans les directions indiquées par les flèches 30 en figure 3 en surmontant les forces de frottement sur les bords des ouvertures des gorges 14 et en annulant ainsi plus ou moins l'allongement auquel elles avaient été précédemment soumises lors de leur montage sur les profilés 16. Ainsi, les garnitures 10 sont correctement appliquées l'une contre l'autre le long de la ligne de jonction 28 sans discontinuité de l'étanchéité, et elles ne risquent pas non plus de former des ondulations dans les gorges 14 des profilés, leur déplacement dans les directions indiquées par les flèches 30 étant juste suffisant pour compenser la diminution de longueur des profilés résultant de la thermosoudure.

Pour cela, la tension appliquée aux garnitures d'étanchéité lors de leur pose sur les profilés a été contrôlée, de telle sorte que l'allongement subi par les garnitures lors de leur pose corresponde approximativement à la diminution de longueur des profilés résultant de leur soudure. Dans ces conditions, la pression qui est appliquée suur les extrémités des garnitures pendant la soudure des profilés, permet à ces garnitures de revenir à peu près à leur état initial où elles ont un allongement nul ou voisin de zéro, la diminution de longueur des garnitures s'adaptant approximativement à la diminution de longueur des profilés.

De plus, les bourrelets de soudure 26 ne peuvent se former le long de la ligne de jonction 28 dans les zones qui sont occupées par les garnitures 10, du fait de la présence de ces garnitures. On a constaté qu'en pratique, il ne se formait pas de ligne ou point dur de matière thermosoudable sous les garnitures 10 au niveau de leur jonction 32 et que la qualité d'étanchéité apportée par ces garnitures restait la même dans cette zone de jonction.

En outre, il n'y a aucune salissure des plaques chauffantes utilisées pour la thermosoudure des profilés.

De façon générale, l'invention permet de faciliter le montage des garnitures d'étanchéité sur les profilés de menuiserie et l'assemblage de ces profilés par thermosoudure tout en maintenant une qualité de l'étanchéité sans dégradation de l'esthétique.

## Revendications

1. Procédé de fabrication d'une menuiserie en PVC ou autre matière plastique thermosoudable, consistant à monter des garnitures d'étanchéité (10) en matériau élastiquement déformable sur des profilés (16) de menuiserie et à assembler ces profilés entre eux par thermosoudage réalisé par chauffage des extrémités des profilés et appui des extrémités ramollies l'une sur l'autre, caractérisé en ce que les garnitures d'étanchéité (10) en un matériau non-thermosoudable tel que du caoutchouc par exemple sont montées dans des gorges ou rainures (14) des profilés (16) et y sont laissées en place lorsque les extrémités ramollies des profilés sont pressées l'une sur l'autre, de telle sorte que les extrémités des garnitures (10) sont alors également pressées l'une sur l'autre et s'opposent à la formation d'un bourrelet de matériau thermosoudable dans leurs zones de montage sur les profilés.

2. Procédé selon la revendication 1, caractérisé en ce que les garnitures d'étanchéité (10) sont montées en tension avec un allongement faible dans les gorges ou rainures (14) des profilés.

3. Procédé selon la revendication 2, caractérisé en ce que l'allongement des garnitures d'étanchéité dans les gorges ou rainures (14) des profilés est de l'ordre de 1 à quelques %.

4. Procédé selon l'une des revendications précédentes, caractérisé en ce que les garnitures d'étanchéité (10) sont montées à frottement dans les gorges ou rainures des profilés.

5. Procédé selon l'une des revendications précédentes, caractérisé en ce que les garnitures d'étanchéité (10) comprennent des moyens (24) de limitation de leur allongement en tension, tels qu'un fil, un ruban, une tresse ou un cordon longitudinal sensiblement inextensible noyé dans la matière desdites garnitures.

6. Procédé selon l'une des revendications 2 à 5, caractérisé en ce que la poussée exercée sur les garnitures d'étanchéité (10) lors du thermosoudage des profilés (16) provoque une diminution de leur allongement, compensant au moins approximativement la diminution de longueur des profilés causée par leur thermosoudure.

7. Garniture d'étanchéité pour menuiserie en PVC ou autre matériau thermosoudable, destinée à être utilisée dans le procédé décrit dans l'une des revendications précédentes, caractérisé en ce qu'elle est réalisée en matériau extensible non-thermosoudable tel que du caoutchouc.

8. Garniture selon la revendication 7, caractérisée en ce qu'elle comprend un moyen (24) de limitation d'allongement en tension tel par exemple qu'un élément longiligne sensiblement inextensible du type fil, cordon, ruban ou tresse noyé dans la matière de la garniture et s'étendant longitudinalement dans celle-ci.

9. Garniture selon la revendication 7 ou 8, caractérisée en ce qu'elle est réalisée en matière compacte et/ou en matière cellulaire.

10. Garniture selon l'une des revendications 7 à 9, caractérisée en ce qu'elle est réalisée en un élastomère synthétique comprenant de 20 à 40 % environ en poids de EPDM, de 20 à 40 % environ en poids d'une huile plastifiante, et du noir de carbone, cette matière pouvant supporter une température de l'ordre de 245 °C pendant la durée du thermosoudage des profilés de menuiserie, sans dégradation de ses caractéristiques.
